# FASCICULE DE BREVET EUROPEEN

(11) **EP 0 508 929 B1**
(45) Date de publication et mention de la délivrance du brevet: **27.12.1996**
(21) Numéro de dépôt: 92500018.4
(22) Date de dépôt: 03.03.1992
(51) Int. Cl.: B29D 31/50, C09J 5/02

(54) **Procédé de fixation de la semelle à la tige dans la fabrication de chaussures de cuir**
Verfahren zur Verbindung der Sohle an den Schaft bei der Herstellung von Lederschuhen
Method for joining the sole to the upper in the fabrication of leather shoes

(30) Priorité: 08.03.1991 ES 9100591
(43) Date de publication de la demande: 14.10.1992
(73) Titulaire: ASOCIACION DE INVESTIGACION PARA LA INDUSTRIA DEL CALZADO Y CONEXAS ( INESCOP), E-03600 Elda (Alicante) (ES)
(72) Inventeur: Maldonado Millan, Fernando, E-03600 Elda (Alicante) (ES); Almela Alarcon, Mariano, E-03600 Elda (Alicante) (ES)

(56) Documents cités:
- EP-A- 0 223 562
- EP-A- 0 381 897
- DE-A- 2 609 266
- DE-A- 2 949 343
- GB-A- 1 554 102
- GB-A- 2 137 638

## Description

Par sa condition naturelle et par ses caractéristiques de confort et de résistance mécanique, le cuir constitue le matériau approprié pour fabriquer des chaussures de qualité.

La peau se constitue principalement d'une protéine fibreuse appelée collagène qui, au cours du processus de tannage, se transforme en cuir, matériau imputrescible et techniquement approprié pour les applications auxquelles on le destine.

Dans la coupe transversale d'une peau, on observe deux couches particulièrement importantes: Une couche supérieure (externe), appelée fleur, formée de fibres très fines qui présentent, généralement, une faible consistence, et une autre couche, située au-dessous de la fleur, appelée corium, constituée de fibres plus grosses et plus fortes, qui présentent généralement une meilleure résistance mécanique.

L'ensemble des couches, fleur et corium, forment le derme de la peau, que l'on transforme en cuir par le processus de tannage.

Une fois les traitements de tannage effectués, et une fois sec, le cuir subit l'opération de finissage, qui dans la pratique consiste à appliquer une couche de résine et de colorants qui remplace alors l'épiderme de la peau fraiche et confère au cuir son aspect externe. Cette pellicule de finissage, présente généralement une faible valeur d'adhérence à la fleur du cuir, si l'on tient compte des exigences qui doivent être respectées pour obtenir un collage de qualité.

Les raisons sus-mentionnées permettent de comprendre la nécessité d'éliminer cette couche de fleur avec le finissage durant la fabrication de la chaussure, au moyen du processus de verrage ou de cardage, pour obtenir, lors du collage ultérieur, une résistance acceptable de l'assemblage semelle-tige.

Le montage et la fixation de la semelle constituent les principales opérations du processus de fabrication de chaussures, et celles dont l'influence sur la qualité du produit fini est la plus importante.

Le montage comprend la série des opérations de mise en forme au cours desquelles on fixe la tige et la doublure à la première, sur la forme sur laquelle on monte la chaussure, en donnant ainsi à cette dernière sa configuration finale. Pendant l'étape du montage, on fixe la premierè sur la base de la forme, puis on assemble ensuite la tige et la doublure en les centrant et en les montant avec fermeté et régularité sur la forme, en fixant à la première une certaine partie de cuir laissée libre à la base de la forme , à l'aide d'un adhésif de montage ou adhésif thermofusible. Cette partie de cuir qui entoure toute la partie extérieure de la base de la forme constitue ce que l'on appelle la marge de montage.

Cette marge de montage constitue la zone du cuir qui subit un traitement mécanique, à savoir verrage ou cardage, pour fixer ultérieurement la semelle, après application de l'adhésif.

"Le verrage est actuellement indispensable pour deux raisons: i) pour les caractéristiques structurelles des cuirs, et ii) parce que les adhésifs, par sa propre nature, ne peuvent pas pénétrer dans l'intérieur du cuir à cause du poids moléculaire élevé des polymères qui interviennent dans sa composition. Ça se passe tant avec les adhésifs développés à base de solvant, fondés sur polymères du type polyuréthane ou polychlorprène, qu'avec ceux qui sont développés à base d'eau. Récemment, on a proposé l'utilisation (Brevet GB-A-2137638 état de la technique le plus proche) d'adhésifs solides sans solvant, basés sur prépolymères de polyuréthane réactionnel qui sont activés par chaleur; aussi ces adhésifs présentent l'inconvénient de ne pénétrer pas dans le cuir, donc, un verrage préalable du cuir est indispensable pour son application, comme il est reflété dans la description (page 5, lignes 51-53), dans les exemples (page 6, lignes 19 et 45) et dans la methode illustrante (page 7, lignes 13 et 14) de ce brevet."

L'excès de verrage ou de cardage peut avoir de graves conséquences telles que l'insuffisance du traitement effectué. L'excès de verrage ou de cardage du cuir peut provoquer l' affaiblissement du cuir, voire même amener le cuir à se couper, ce qui se traduira par des déchirures de la chaussure à l'usage. Par ailleurs, si l'on n'élimine pas correctement les couches de finissage et de fleur pour atteindre des zones plus résistantes de la peau dont la teneur en matières grasses est plus faible, il n'est pas possible de garantir un bon collage.

Ainsi, dans le cas de petites peaux, de chèvres, d'agneaux et de métis, le contrôle de cette opération s'avère particulièrement difficile, du fait de la faible épaisseur du matériau, qui présente fréquemment des déchirures ou des affaiblissements de la zone du corium, que l'on observe déjà à l'usine ou à l'usage. Le problème devient encore plus important avec la différence de consistence des cuirs, propre à leur origine.

La réparation de la zone verrée ou cardée, qui peut rester visible, une fois la semelle fixée, et difficile à cacher constitue un autre problème important, et représente un coût de main d'oeuvre élevé.

En effet, l'opération elle-même requiert un personnel qualifié qui possède une compétence particulière pour réaliser correctement cette tâche.

Cela se traduit par des coûts excessifs, dans lequels il convient d'inclure la dévaluation de la marchandise due à des chaussures de deuxième catégorie, sans oublier les problèmes d'aspect qui ont une incidence directe sur la qualité du produit fini.

On peut ainsi déduire que dans l'art antérieur, on ne connaissait pas de procédés autres que le verrage ou le cardage de la zone correspondant à la marge de montage avant l'application de l'adhésif, pour obtenir des valeurs de résistance appropriées au niveau de l'assemblage tige de cuir - semelle.

Par conséquent, la présente invention a pour objet un procédé fondé sur la préparation du cuir, qui cherche à éviter le verrage ou le cardage préalable de la marge de montage de la chaussure lors du collage ultérieur. Cet objet est atteint au moyen du procédé selon les caractéristiques de la partie caractérisante de la revendication 1. A l'aide des polymères de polyuréthane réactionnel revendiqués dans la partie caractérisante de la revendication 1, qui réticulent "in situ" en impliquant les propres groupes de la peau, on peut améliorer la cohésion entre les différentes couches de la peau, et permettre de renforcer la structure dans son ensemble, ce qui rend inutile l'opération de verrage ou de cardage pour améliorer l'aptitude au collage.

Ce procédé de renforcement de la structure fibreuse du cuir, que l'on réalise à la place de l'opération de verrage ou de cardage que l'on effectue actuellement entre les étapes de montage et de fixation de la semelle au cours de la fabrication de la chaussure, se compose de deux étapes fondamentales:
- Application, au moyen d'un pinceau ou d'un outil adéquat, sur la marge de montage de la chaussure de la dissolution du polymère de polyuréthane, facilitant la pénétration dudit polymère dans la structure fibreuse du cuir.
- Réalisation des traitements adéquats pour produire la réticulation "in situ" de la préparation de polyuréthane à l'intérieur de la structure fibreuse du cuir, impliquant dans ce processus les propres groupes fonctionnels du substrat protéique de la peau. Ces traitements peuvent consister en un apport de chaleur, bien que dans certains cas, on obtient la réticulation à température ambiante au bout de quelques heures. Pour accélérer le processus, il est possible d'utiliser des catalyseurs.

On obtient les préparations de polyuréthane en faisant réagir des composés polyhydroxylés avec un excés d'isocyanates bi- ou polyfonctionnels; le rapport groupe isocyanate/groupe hydroxylé peut se situer entre 1.4/1 et 3/1. La réaction s'effectue entre 70° et 120°C dans un dissolvant anhydre et exempt de groupes réagissant avec les diisocyanates, ou dans un milieu libre de dissolvant (100% solides).

On peut également obtenir d'autres préparations intéressantes à partir de polyisocyanates et de polyamines.

On peut utiliser des diisocyanates de nature aromatique comme les mélanges de 2,4 toluène diisocyanate et de 2,6 toluène diisocyanate; comme le diphénylméthane 4,4 diisocyanate , le xylènediisocyanate, le naphtalènediisocyanate, le 1,4 benzène diisocyanate , le benzène 1,3 bis (1-isocyanate, 1-méthyléthyl); des mélanges d'isocyanates dont la fonctionalité est supérieure à deux, comme les produits de la classification "PAPI", des triisocyanates aromatiques et des additifs de toluène diisocyanate avec du triméthylolpropane. Comme diisocyanates de nature aliphatique on peut utiliser de l'héxaméthylène 1,6 diisocyanate ; de l'isophorone diisocyanate , du 4,4 dicyclohéxylméthane diisocyanate ; du 2, 4, 4 triméthylhéxaméthylène diisocyanate ; du 2, 2, 4 triméthylhéxaméthylène diisocyanate ; du 1,4 cyclohéxane diisocyanate et des produits intermédiaires et des trimères de ces derniers.

Comme composés polyhydroxylés, on peut utiliser ceux dont la fonctionalité hydroxylique est supérieure ou égale à 2, comme les polyéthers polyhydroxylés, les polyesters polyhydroxylés saturés, les polycarbonates polyhydroxylés et des mélanges ou des combinaisons de ces derniers, dont le poids moléculaire se situe entre 300 et 2000 dalton, linéaires ou ramifiés. On peut également utiliser les polyols dont le poids moléculaire est faible, à savoir, inférieur à 300 dalton, comme le 1,4- butane-diol, le triméthylolpropane, le néopenthylglycol et l'éthylèneglycol.

Les préparations de polyuréthanes réactionnels que l'on utilise, présentent généralement une teneur en groupes isocyanate libres comprise entre 2 et 10%, et une teneur en solides se situant entre 20 et 100%, bien que l'on emploie de préférence des solutions dont la teneur en isocyanate libre se situe entre 3 et 6% et dont la teneur en solides est comprise entre 40 et 70%.

Après avoir appliqué la préparation de polyuréthanes, on peut passer à l'étape suivante de la fabrication de chaussure (fixation de la semelle) que l'on peut effectuer suivant le procédé habituel, en utilisant les adhésifs employés pour réaliser les opérations de collage traditionnelles.

Pour faciliter la compréhension des idées exposées ci-dessus, on va décrire quelques modes de réalisation cités à titre purement illustratifs, et qui, de ce fait, ne doivent pas être considérés comme limitatifs de la portée de la présente invention.

Les traitements auxquels il est fait référence dans les exemples suivants sont mis en oeuvre au cours du processus de fabrication de la chaussure après le montage de la tige sur la forme et avant l'application de l'adhésif.

Le polymère de polyuréthane réactionnel est appliqué sur la marge de montage du matériau de la tige et éventuellement sur la semelle de marche en cuir.

Le matériau de la tige peut être constitué de tout type de cuir, particulièrement des cuirs avec un finissage dont l'épaisseur n'est pas excessive, ou sans finissage superficiel.

Concrètement, pour les exemples cités ci-dessous , au cours de la fabrication des chaussures on a utilisé des peaux de chèvre avec un finissage de caséine (lissable).

**Exemple 1****:** On prépare le polymère de polyuréthane utilisé dans cet exemple en faisant réagir 450 g d'hydroxypolyéther difonctionnel, à base d'oxyde de propylène, présentant un poids moléculaire moyen de 1000 dalton, avec 150 g d'un mélange de 2,4 toluène diisocyanate et de 2,6 toluène diisocyanate dans une proportion de 80/20 respectivement, à une température de 90-95°C, jusqu'à obtention de l'isocyanate calculé à 5,8%, en ajoutant 400 g d'un dissolvant aromatique consistant en un mélange d'hydrocarbures aromatiques dont le point d'ébullition se situe entre 160 et 180°C. Enfin, on obtient un liquide transparent, de couleur jaunâtre avec une teneur en polymères de 60%.

A l'aide d'un pinceau ou d'un autre outil approprié, on applique la dissolution de la préparation de polyuréthane sur toute la périphérie de la marge de montage de la chaussure, en veillant à ce qu'elle pénètre bien à l'intérieur du cuir, et en la diluant si nécessaire. Comme dissolvant, on peut utiliser de la méthyléthylcétone. Enfin, lors de l'application du produit, on utilise comme catalyseurs de l'octoate stanneux, une dissolution de triéthylènediamine dans du dipropylèneglycol, ou une combinaison des deux.

On effectue ensuite le traitement thermique qui, dans ce cas précis, consiste à insuffler de l'air chaud à 150°C pendant 1 à 5 minutes.

Une fois ce traitement terminé, on applique l'adhésif correspondant et la chaussure subit les différents processus normaux de fabrication pour se transformer en un produit fini.

**Exemple 2** **:** On effectue le même traitement de la marge de montage de la chaussure que dans l'exemple 1, mais on réalise un verrage très superficiel du finissage du cuir avant d'appliquer la préparation de polyuréthane dans le but de faciliter la pénétration de cette dernière dans le cuir, sans besoin de la diluer.

**Exemple 3** **:** Préparation du polymère de polyuréthanes réactionnel: on fait réagir 450 g d'un hydroxylpolyester à base de 1,4 butane-diol et d'acide adipique, dont le poids moléculaire moyen est de 1000 dalton, avec 130 g d'un mélange de 2,4 toluène diisocyanate et de 2,6 toluène diisocyanate dans une proportion de 80/20, à une température de 90-100°C pour obtenir l'isocyanate calculé à 4,3%.

Ensuite, on ajoute 420 g d'un dissolvant aromatique, se composant d'un mélange d'hydrocarbures aromatiques, dont le point d'ébullition se situe entre 160 et 180°C. Le produit obtenu est un liquide transparent jaunâtre avec une teneur en polymères de 58%.

On applique ensuite ce produit de la même manière que celle décrite dans les exemples 1 ou 2.

**Exemple 4****:** Préparation du polymère de polyuréthanes réactionnel: On fait réagir 284 g d'un hydroxylpolyéther difonctionnel à base d'oxyde de propylène, dont le poids moléculaire moyen est de 400, avec 316 g d'isophorone diisocyanate , à l'aide de 0,05 g d'octoate stanneux, à une température de 90-95°C, jusqu'à obtention de l'isocyanate libre calculé à 10,0%. Ensuite, on ajoute 400 g de toluène.

Le produit obtenu est un liquide transparent, de couleur légèrement jaunâtre, avec une teneur en polymères de 60%.

On applique ce produit de la même manière que dans les exemples 1 ou 2.

## Revendications

1. Procédé de préparation du cuir pour fixer des semelles aux tiges lors de la fabrication de chaussures qui consiste à réaliser un traitement sur la marge de montage de la chaussure à l'aide d'une préparation de polyuréthane réactionnel qui forme une réticulation à l'intérieur du cuir caractérisé en ce que la marge de montage de la chaussure n'est pas verrée ou cardée, qu'une dissolution du polymère de polyuréthane est appliquée sur la marge de montage de la chaussure de telle sorte, que la pénétration dudit polymère dans la structure fibreuse du cuir est facilitée, et en ce qu'une réticulation "in situ" de la préparation de polyuréthane à l'intérieur de la structure fibreuse du cuir est réalisée de manière à ce que la structure fibreuse de ce matériau est renforcée et que la cohésion entre les couches de peau est améliorée.

2. Procédé selon la revendication 1, caractérisé en ce qu'il consiste à effectuer un verrage très superficiel pour faciliter l'absorption du polyuréthane avant d'appliquer la préparation de polyuréthane, dans le cas où le finissage du cuir ne présente pas une porosité suffisante, le dit verrage n'affectant que le dit finissage.

3. Procédé selon les revendications 1 ou 2, caractérisé en ce que les polyuréthanes les plus conseillés sont ceux dont le poids moléculaire moyen est inférieur à 4.000 ou 6.000 dalton, selon le type de cuir et le finissage superficiel de ce dernier.

4. Procédé selon la revendication 3, caractérisé en ce qu'il est possible d'utiliser des catalyseurs, et en ce qu'on choisit la température de polymérisation la plus adéquate en fonction du polyuréthane utilisé.

## Claims

1. A process to prepare leather before the cementing of the sole leather with the upper leather in the shoe manufacturing. The process involves a treatment of the shoe lasting allowance with a reactive polyurethane preparation which forms a crosslink inside the leather, characterised by the fact that the shoe lasting allowance is not buffed or roughed, that a polymer solution of polyurethane is applied to the shoe lasting allowance in such a way that the penetration of the said polymer into the fibre structure of the leather is facilitated. This forms "in situ" a crosslinking of the polyurethane preparation on the inside of the fibre structure, resulting in a reinforcement of the leather and an improved cohesion within the leather layers.

2. Method outlined in 1, in which the leather receives a superficial buffing, in order to facilitate absorption of the polyurethane, before its application, in the case of a leather finish of insufficient porosity. This buffing only affects the finished coat.

3. Method outlined in 1 and 2, in which the most recommended polyurethanes have average molecular weights of less than 4.000 or 6.000 dalton, according to the leather type or its finish.

4. Method outlined in 3, in which it is possible to use catalysts - the chosen polymerisation temperature depends on the polyurethane used.

## Patentansprüche

1. Vorbereitungsverfahren von Leder zum Verkleben von Bodenleder mit Oberleder bei der Schuhherstellung, wobei der Zwickenschlag eine Behandlung mit reaktionsfähigen Polyurethanzubereitung bekommen hat, welche sich in Innern des Leders eine Quervernetzung ausgibt. Das Verfahren wird dadurch gekennzeichnet, dass der Zwickeinschlag weder verglassen noch aufgerauht werden muss, dass auf den Zwickeinschlag eine Polymerzubereitung so angewandt wird, dass das Polymer in den Faserstruktur des Leders leicht eindringt, und dass "in situ" eine Quervernetzung der Polyurethanzubereitung in Innern des Leders so stattfindet, dass die Faserstruktur des Leders sich verstärkt und die Kohesion der Hautschichten sich verbessert.

2. Verfahren nach Anspruch 1, dadurch gekennzeichnet, dass die Oberfläche des zugerichtete Leders ganz leicht aufgerauht wird, um die Aufnahme der Polyurethanzubereitung zu erleichtern, falls die Lederzurichtung nicht genug porös ist. Das obengennante Aufrauhen hat nur eine Wirkung auf die Zurichtung.

3. Verfahren nach Ansprüche 1 oder 2, dadurch gekennzeichnet, dass die empfehlenswerten Polyurethane diejenigen sind, dessen mittleren Molekulargewichten niedriegeren als 4.000 bzw 6.000 dalton liegen, in Abhängigkeit der Ledersorten und der oberflächigen Zurichtung des Leders.

4. Verfahren nach Anspruch 3, dadurch gekennzeichnet, dass die Katalizatorenanwendung möglich ist und man die besten Polymerizationstemperatur in Anhängigkeit der Polyurethanklasse gewählt hat.
